# EUROPEAN PATENT APPLICATION

(11) **EP 4 489 497 A1**
(43) Date of publication of application: **08.01.2025**
(21) Application number: 23794905.2
(22) Date of filing: 27.03.2023
(51) Int. Cl.: H04W 72/04

(54) **SIDELINK RESOURCE CONFIGURATION METHOD AND APPARATUS, AND DEVICE**

(30) Priority: 29.04.2022 CN 202210475208
(71) Applicant: CICT Connected and Intelligent Technologies Co., Ltd., Chongqing 400041 (CN)
(72) Inventor: ZHENG, Shilei, Chongqing 400000 (CN); ZHAO, Rui, Chongqing 400000 (CN); HU, Jinling, Chongqing 400000 (CN); ZHAO, Li, Chongqing 400000 (CN); XI, Yifan, Chongqing 400000 (CN)
(74) Representative: Berggren Oy
(86) International application number: PCT/CN2023/084147
(87) International publication number: WO 2023/207470

(57) **Abstract**

The present disclosure provides a method and apparatus of resource configuration for a sidelink, and a device. The method includes: selecting a transmission resource for a first channel from a resource pool according to configuration information of the resource pool, where the first channel includes at least one of the following: a positioning channel used to transmit a sidelink-positioning reference signal (SL-PRS) or transmit an SL-PRS and positioning data information; a positioning data channel used to transmit the positioning data information; and a positioning control channel used to transmit positioning scheduling information.

## Description

### Cross-Reference to Related Application

The present disclosure claims priority to Chinese Patent Application No. 202210475208.3 filed in China on April 29, 2022, which is incorporated in its entirety herein by reference.

### Technical Field

The present disclosure relates to the technical field of communication, and particularly relates to a method and apparatus of resource configuration for a sidelink, and a device.

### Background

Research and standardization work on new radio (NR) positioning (cellular network uplink and downlink) are carried out in third generation partnership project (3GPP) release 16. Within cellular network coverage, a base station transmits a cell-specific downlink positioning reference signal (PRS), and a terminal transmits an uplink sounding reference signal (SRS) for positioning. Accordingly, the terminal can measure a reference signal time difference (RSTD), measure reference signal received power (RSRP) of the downlink (DL) PRS, or measure a time difference between receiving the DL PRS and transmitting the SRS by the terminal. The base station can measure a relative time of arrival (RTOA) of an uplink reference signal, RSRP of the SRS, a time difference between receiving the SRS and transmitting the DL PRS by a next-generation node B (gNB), and an angular measurement value. The location of user equipment (UE) can be calculated by processing the measurement value.

In the related art, research and standardization work on sidelink positioning is actively under way. However, different from an NR downlink and uplink (UL), a sidelink is mainly used in indoor areas, outdoor areas, tunnel areas, etc. In outdoor areas and tunnel areas, a positioning service that supports a moving speed up to 250 km/h and the like are required. Therefore, corresponding positioning measurement processes and methods between UE need to be redesigned according to resource selection and physical layer structure characteristics, so as to adapt to the sidelink positioning technology.

### Summary

The present disclosure provides a method and apparatus of resource configuration for a sidelink, and a device, and solves the problem of lack of a resource configuration solution adapted to sidelink positioning in the related art.

In a first aspect, embodiments of the present disclosure provide a method of resource configuration. The method is applied to a first device and includes:
selecting a transmission resource for a first channel from a resource pool according to configuration information of the resource pool, where
the first channel includes at least one of the following:
   a positioning channel used to transmit a sidelink-positioning reference signal (SL-PRS) or transmit the SL-PRS and positioning data information;
   a positioning data channel used to transmit the positioning data information; and
   a positioning control channel used to transmit positioning scheduling information.

In a second aspect, the embodiments of the present disclosure provide a method of resource configuration. The method is applied to a second device and includes:
receiving information transmitted by a first device through a first channel according to configuration information of a resource pool, where
the first channel includes at least one of the following:
   a positioning channel used to transmit an SL-PRS or transmit the SL-PRS and positioning data information;
   a positioning data channel used to transmit the positioning data information; and
   a positioning control channel used to transmit positioning scheduling information.

In a third aspect, the embodiments of the present disclosure provide an apparatus of resource configuration. The apparatus is applied to a first device and includes:
a selection component used to select a transmission resource for a first channel from a resource pool according to configuration information of the resource pool, where
the first channel includes at least one of the following:
   a positioning channel used to transmit a sidelink-positioning reference signal (SL-PRS) or transmit the SL-PRS and positioning data information;
   a positioning data channel used to transmit the positioning data information; and
   a positioning control channel used to transmit positioning scheduling information.

In a fourth aspect, the embodiments of the present disclosure provide an apparatus of resource configuration. The apparatus is applied to a second device and includes:
a reception component used to receive information transmitted by a first device through a first channel according to configuration information of a resource pool, where
the first channel includes at least one of the following:
   a positioning channel used to transmit an SL-PRS or transmit the SL-PRS and positioning data information;
   a positioning data channel used to transmit the positioning data information; and
   a positioning control channel used to transmit positioning scheduling information.

In a fifth aspect, the embodiments of the present disclosure provide a device. The device includes a transceiver, a memory, a processor, and a computer program stored on the memory and runnable on the processor, where the processor implements steps of the method of resource configuration in the first aspect or implements steps of the method of resource configuration in the second aspect when executing the computer program.

In a sixth aspect, the embodiments of the present disclosure provide a computer-readable storage medium. The computer-readable storage medium stores a computer program, where the computer program implements steps of the method of resource configuration in the first aspect or implements steps of the method of resource configuration in the second aspect when executed by a processor.

The technical solution of the present disclosure has the beneficial effects as follows:
According to the embodiments of the present disclosure, a transmission resource can be selected for the first channel from the resource pool according to the configuration information of the resource pool, so as to implement first channel transmission on the transmission resource. The first channel includes at least one of the positioning channel, the positioning data channel and the positioning control channel. Different channels can be used to transmit positioning signals related to different sidelinks respectively. In this way, a resource configuration solution adapted to sidelink positioning is achieved.

### Brief Description of the Drawings

Fig. 1 is a first schematic diagram of a sidelink-positioning reference signal (SL-PRS) frequency domain pattern;
Fig. 2 is a second schematic diagram of an SL-PRS frequency domain pattern according to some embodiments of the present disclosure;
Fig. 3 is a flowchart of a method of resource configuration according to some embodiments of the present disclosure;
Fig. 4-1 is a schematic structural diagram of a positioning channel according to some embodiments of the present disclosure;
Fig. 4-2 is a schematic structural diagram of a positioning channel according to another embodiment of the present disclosure;
Fig. 5 is a schematic diagram of a physical layer structure of a positioning control channel according to some embodiments of the present disclosure;
Fig. 6 is a schematic diagram of a physical layer structure of a positioning data channel according to some embodiments of the present disclosure;
Fig. 7-1 is a first schematic diagram of an SL-PRS time domain pattern according to some embodiments of the present disclosure;
Fig. 7-2 is a second schematic diagram of an SL-PRS time domain pattern according to some embodiments of the present disclosure;
Fig. 8 is a third schematic diagram of an SL-PRS time domain pattern according to some embodiments of the present disclosure;
Fig. 9 is a fourth schematic diagram of an SL-PRS time domain pattern according to some embodiments of the present disclosure;
Fig. 10 is a fifth schematic diagram of an SL-PRS time domain pattern according to some embodiments of the present disclosure;
Fig. 11 is a first schematic diagram of frequency domain configuration of a positioning control channel and a positioning data channel according to some embodiments of the present disclosure;
Fig. 12 is a second schematic diagram of frequency domain configuration of a positioning control channel and a positioning data channel according to some embodiments of the present disclosure;
Fig. 13 is a third schematic diagram of frequency domain configuration of a positioning control channel and a positioning data channel according to some embodiments of the present disclosure;
Fig. 14 is a fourth schematic diagram of frequency domain configuration of a positioning control channel and a positioning data channel according to some embodiments of the present disclosure;
Fig. 15 is a schematic diagram of configuration information of a second resource pool according to some embodiments of the present disclosure;
Fig. 16 is a schematic diagram of a multiplexing mode of a positioning control channel and a positioning data channel according to some embodiments of the present disclosure;
Fig. 17-1 is a schematic diagram of a frequency division multiplexing (FDM) mode of a positioning control channel and a positioning channel according to some embodiments of the present disclosure;
Fig. 17-2 is a schematic diagram of a time division multiplexing (TDM) mode of a positioning control channel and a positioning channel according to some embodiments of the present disclosure;
Fig. 18 is a schematic diagram of configuration information of a resource pool according to some embodiments of the present disclosure;
Fig. 19 is a flowchart of a method of resource configuration according to another embodiment of the present disclosure;
Fig. 20 is a structural block diagram of an apparatus of resource configuration according to some embodiments of the present disclosure;
Fig. 21 is a structural block diagram of an apparatus of resource configuration according to another embodiment of the present disclosure; and
Fig. 22 is a structural block diagram of a device according to some embodiments of the present disclosure.

### Detailed Description of the Embodiments

In order to make the technical problem to be solved, technical solutions, and advantages of the present disclosure clearer, detailed description will be given below with reference to the accompanying drawings and specific embodiments. In the following description, specific details, such as specific configurations and components, are provided merely to assist in thorough understanding of embodiments of the present disclosure. Therefore, those skilled in the art will recognize that various changes and modifications can be made to the embodiments described herein without departing from the scope and spirit of the present disclosure. Moreover, well-known functions and structures are omitted for clarity and conciseness.

It should be understood that "one embodiment" or "an embodiment" throughout the specification means that a particular feature, structure, or characteristic related to the embodiments is included in at least one embodiment of the present disclosure. Thus, "in one embodiment" or "in an embodiment" in various places throughout the specification do not necessarily refer to a same embodiment. Furthermore, the particular features, structures, or characteristics can be combined in any suitable manner in one or more embodiments.

In all the embodiments of the present disclosure, the numbers of all the following processes do not mean the order of execution, and the order of execution of each process should be determined by its function and internal logic, and should not impose any limitation on the implementation processes of the embodiments of the present disclosure.

Moreover, the terms "system" and "network" are often used interchangeably herein.

In some embodiments provided in the present disclosure, it should be understood that "B corresponding to A" means that B is associated with A, and B can be determined from A. It should also be understood that "B is determined according to A" does not mean that B is determined only according to A, but can mean that B is determined according to A and/or other information.

In some embodiments of the present disclosure, an access network is not limited in form, and may be an access network including a macro base station, a pico base station, a Node B (a name of the 3G mobile base station), an enhanced base station (eNB), a home enhanced base station (femto eNB or home eNode B or home eNB or HeNB), a relay station, an access point, a remote radio unit (RRU), a remote radio head (RRH), etc. A user terminal may be a mobile phone (or cell phone), or other device capable of transmitting or receiving wireless signals, including user equipment, personal digital assistant (PDA), a wireless modem, a wireless communication apparatus, a handheld apparatus, a laptop computer, a cordless phone, a wireless local loop (WLL) stations, customer premise equipment (CPE) capable of converting mobile signals into WiFi signals, a mobile smart hotspot, a smart home appliance, or a device capable of spontaneous communication with mobile communication networks without human operation.

As for a new radio (NR) sidelink at a Rel-16 stage, time division multiplexing (TDM) and frequency division multiplexing (FDM) are used and 2nd-stage sidelink control information (SCI) are introduced into a physical sidelink control channel (PSCCH) and a physical sidelink shared channel (PSSCH), and remaining data are carried by the PSSCH. Further, 1st-stage SCI is carried by the PSCCH, is used to indicate information such as a time-frequency resource location, a priority, a period, and a corresponding modulation and coding scheme (MCS) occupied by a current transport block (TB), and does not introduce a corresponding sidelink-positioning reference signal (SL-PRS).

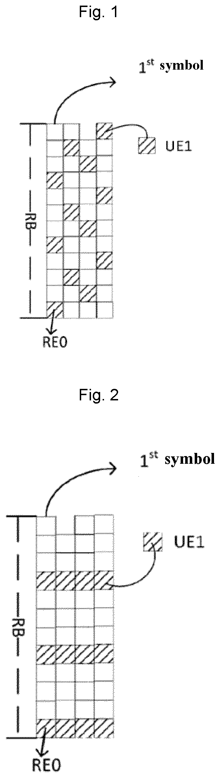

Description of a PRS frequency domain pattern is as follows:
the frequency domain pattern is information such as a comb size adopted by the PRS, and a start location of each RB on each time domain symbol. The information may specifically include, but is not limited to, the following contents: a comb size, a start mapping RE location on each RB of a start symbol, and mapping offset information of RE granularity (RE offset) on each symbol. In a case of repeated mapping on each symbol, only an RE mapping location in each RB in a frequency domain is required. As shown in Figs. 1-2, for user equipment 1 (UE1), comb size = 4, the start mapping RE location on each RB of a start symbol is index = 0, and the RE offset on each symbol is {0, 2, 1, 3}.

When a plurality of pieces of UE share a same PRS dedicated resource, in order to guarantee orthogonality of the PRSs transmitted between different UE, each resource mapping location for transmitting the PRS of the UE and a used orthogonal cover code (OCC) (or cyclic shift (CS)) may be associated with user identity information (source ID, etc.) of the transmitting or receiving UE or a mapping resource location of PRS request signaling, or configured by a network.

A PRS sequence may be a gold sequence (corresponding to the OCC) or a Zadoff-Chu (ZC) sequence (corresponding to the cyclic shift (CS)).

For Rel-16 NR positioning, two types of reference signals for positioning are mainly introduced: a downlink positioning reference signal (PRS) and an uplink sounding reference signal (SRS) for positioning.

The downlink positioning reference signal (PRS) adopts a gold sequence, and introduces a PRS resource, a PRS resource set, a PRS positioning frequency layer and other designs. The PRS resource may adopt a comb structure in a frequency domain, and may occupy a plurality of continuous orthogonal frequency division multiplexing (OFDM) symbols in a time domain. With a single port, a maximum bandwidth cannot be greater than 272 physical resource blocks (PRBs), and a minimum bandwidth cannot be less than 24 PRBs.

The uplink SRS for positioning (SRS-POS) adopts a ZC sequence, may occupy a plurality of continuous OFDM symbols in a time domain, and also adopts a comb structure in a frequency domain, so as to support frequency division multiplexing of a plurality of SRS-POS on a same OFDM symbol. Compared with two-port transmission, single-port transmission has an advantage that power spectral density of the SRS-POS at a receiver side of a base station can be improved, such that coverage and quality of the SRS-POS can be improved. A maximum bandwidth supported in the frequency domain is 272 RBs, and a minimum bandwidth is 4 RBs. The SRS-POS supports periodic, semi-persistent and aperiodic resource type configuration.

Release 16 NR positioning supports a "radio access technology (RAT)-independent" positioning technology, including a global navigation satellite system (GNSS), atmospheric pressure sensor positioning, WLAN positioning, inertial navigation positioning, Bluetooth positioning, and terrestrial beacon system positioning.

The release 16 NR positioning studies "RAT-dependent" and a hybrid positioning technology to improve positioning accuracy. According to a main solution, a gNB periodically transmits a downlink PRS, and supports downlink-time difference of arrival (DL-TDOA) and downlink-angle of departure (DL-AoD) measurement, and enhanced cell identification (E-CID) detection. A terminal transmits an uplink SRS for positioning, and supports UL-TDOA and uplink-angle of arrival (UL-AoA) measurement. Round trip time (RTT) measurement through uplink and downlink combination is supported, and a multi-RTT can be measured based on the plurality of base stations for positioning.

An overall positioning process of NR/long term evolution (LTE) positioning is controlled and scheduled by the base station and a location management function (LMF).

It should be noted that a cellular network positioning solution in the related art cannot support SL positioning due to a plurality of problems. These problems mainly include: (1) gNB and LMF interaction is required, and out-of-cellular coverage scenarios are not supported, but SL positioning may work in out-of-cellular coverage scenarios when performing distributed positioning processing, and there is no interaction between gNB and LMF; and (2) the gNB is mostly stationary, and SL positioning needs to support nodes participating in positioning to move at a high speed, such that requirements for positioning accuracy, reliability, delay and so on are higher and cannot be supported by relevant mechanisms.

Specifically, the embodiments of the present disclosure provide a method and apparatus of resource configuration for a sidelink, and a device, and solve the problem of lack of a resource configuration solution adapted to sidelink positioning in the related art.

### Embodiment 1

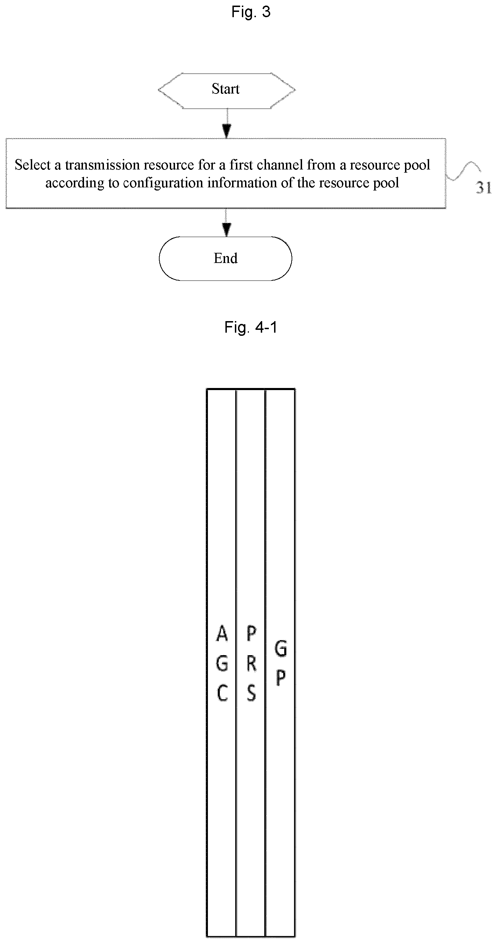

As shown in Fig. 3, the embodiment of the present disclosure provides a method of resource configuration for a sidelink. The method is applied to a first device and includes:
Step 31: a transmission resource is selected for a first channel from a resource pool according to configuration information of the resource pool, where
the first channel includes at least one of the following:
   a positioning channel used to transmit a sidelink-positioning reference signal (SL-PRS) or transmit the SL-PRS and positioning data information;
   a positioning data channel used to transmit the positioning data information; and
   a positioning control channel used to transmit positioning scheduling information.

That is to say, a resource may be selected for the first channel according to the configuration information of the resource pool. Herein, the positioning data information may be specifically understood as sidelink positioning data information. The positioning scheduling information may be specifically understood as sidelink positioning scheduling information.

In some embodiments, a transmission resource can be selected for the first channel from the resource pool according to the configuration information of the resource pool, so as to implement first channel transmission on the transmission resource. The first channel includes at least one of the positioning channel, the positioning data channel and the positioning control channel. Different channels can be used to transmit positioning signals related to different sidelinks respectively. In this way, a resource configuration solution adapted to sidelink positioning is achieved.

In some embodiments of the present disclosure, the transmission resource is selected for the first channel from the resource pool according to configuration information of the resource pool as at least one of the following:
(1) A transmission resource is selected for the positioning channel from a first resource region in a case that the first channel only includes the positioning channel, where the first resource region is one of resource sets of the resource pool.
(2) A first resource is selected for the positioning channel from the first resource region in a case that the first channel includes the positioning channel and the positioning control channel, and a second resource is selected for the positioning control channel from the first resource region or a second resource region, where the second resource region is a resource set different from the first resource region in the resource pool.
   That is to say, the first device may also transmit the positioning data channel on resources in the first resource region or a second resource pool, and may also transmit the positioning control channel on the resources in the first resource region or the second resource pool.
(3) The first resource is selected for the positioning channel from the first resource region in cases that the first channel includes the positioning channel, the positioning control channel and the positioning data channel, and resource mapping locations of the positioning data channel and the positioning control channel are adjacent in a frequency domain, the second resource is selected for the positioning control channel from the first resource region or the second resource region, and a third resource is selected for the positioning data channel from the first resource region or the second resource region.
(4) The first resource is selected for the positioning channel from the first resource region in cases that the first channel includes the positioning channel, the positioning control channel and the positioning data channel, and that the resource mapping locations of the positioning data channel and the positioning control channel are not adjacent in the frequency domain, the second resource is selected for the positioning control channel from the first resource region or the second resource region, and the third resource is selected for the positioning data channel from the first resource region or a third resource region, where the third resource region is a resource set different from the first resource region and the second resource region in the resource pool; where
   the first resource, the second resource and the third resource are transmission resources in the resource pool.

In some embodiments, resource selection may be performed according to specific conditions. Resources for transmission of different channels may come from a same resource pool, for example, different resource regions of the same resource pool, and may also come from different resource pools.

Herein, a specific case of selecting resources for different first channels from different resource pools is described as follows:
the transmission resource is selected for the first channel from the resource pool according to configuration information of the resource pool as at least one of the following:
A transmission resource is selected for the positioning channel from a first resource pool in a case that the first channel only includes the positioning channel, where the first resource pool is one of the resource pool.

It should be noted that the first resource pool may be a dedicated sidelink positioning resource pool. The first device may select a resource from the first resource pool for physical sidelink positioning channel (PSPCH) transmission. The first device may transmit the positioning channel on the resource in the first resource pool.

A first resource is selected for the positioning channel from the first resource pool in a case that the first channel includes the positioning channel and the positioning control channel, and a second resource is selected for the positioning control channel from the first resource pool or a second resource pool, where the second resource pool is a resource pool different from the first resource pool in the resource pools.

It should be noted that the second resource pool may be a non-dedicated sidelink positioning resource pool.

The first resource is selected for the positioning channel from the first resource pool in cases that the first channel includes the positioning channel, the positioning control channel and the positioning data channel, and resource mapping locations of the positioning data channel and the positioning control channel are adjacent in a frequency domain, the second resource is selected for the positioning control channel from the first resource pool or the second resource pool, and a third resource is selected for the positioning data channel from the first resource pool or the second resource pool.

The first resource is selected for the positioning channel from the first resource pool in cases that the first channel includes the positioning channel, the positioning control channel and the positioning data channel, and that the resource mapping locations of the positioning data channel and the positioning control channel are not adjacent in the frequency domain, the second resource is selected for the positioning control channel from the first resource pool or the second resource pool, and the third resource is selected for the positioning data channel from the first resource pool or a third resource pool.

The first resource, the second resource and the third resource are transmission resources in the resource pool.

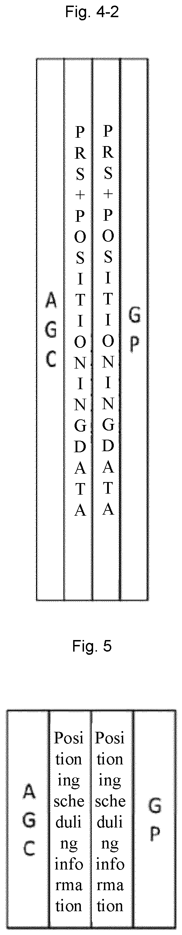

As an embodiment of the present disclosure, a physical layer structure of the positioning channel may adopt structures shown in Figs. 4-1 and 4-2. Fig. 4-1 represents a case that only an SL-PRS is transmitted on the positioning channel. Fig. 4-2 represents a case that an SL-PRS and positioning data are transmitted on the positioning channel.

It should be noted that the SL-PRS may be of a comb mapping structure, and the positioning data may be only mapped to a resource element (RE) without the SL-PRS in a rate-matching mapping manner. Information such as a number of time domain symbols, a start symbol location, and occupied time domain symbol location pattern information of the positioning channel in a slot may be indicated and displayed by the positioning scheduling information, or configured or preconfigured according to high-layer parameters. A frequency domain of the positioning channel may fully occupy a frequency domain bandwidth of the entire resource pool.

As an embodiment of the present disclosure, a physical layer structure of the positioning control channel may adopt a structure shown in Fig. 5.

It should be noted that the positioning scheduling information is carried on the positioning control channel. A number of time domain symbols of the positioning control channel may be configured or preconfigured according to higher-layer parameters. A start symbol may be a second symbol in each slot or configured (or preconfigured) according to higher-layer parameters. A frequency domain mapping start location may be a start location of each sub-channel, or a PRB location configured or preconfigured according to higher-layer parameters. A number of PRBs occupied by the frequency domain may be configured or preconfigured according to higher-layer parameters. The positioning scheduling information may be frequency-division multiplexed with a demodulation reference signal (DMRS) of the positioning control channel. A frequency domain pattern of the DMRS is preconfigured or determined by a device. Herein, the frequency domain pattern of the DMRS may include at least one of the following: a comb size, a comb offset, a cyclic shift, and an orthogonal cover code (OCC).

It should also be noted that the positioning scheduling information may also include positioning data information.

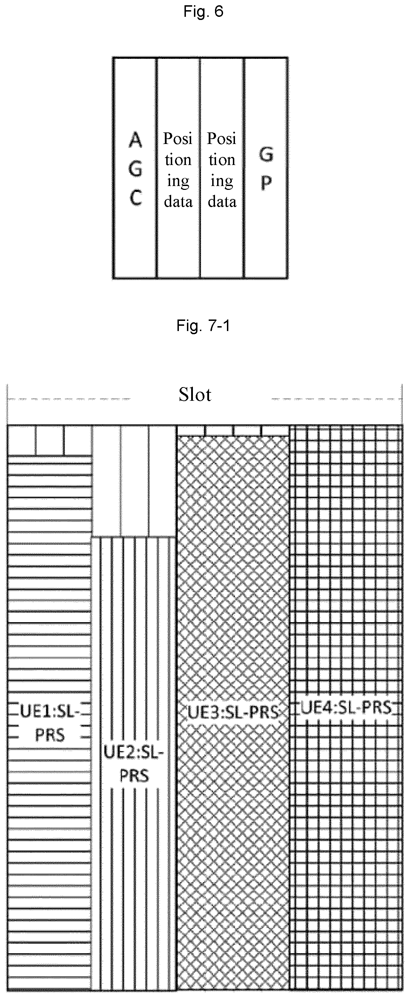

As an embodiment of the present disclosure, a physical layer structure of the positioning data channel may adopt a structure shown in Fig. 6.

It should be noted that a number of time domain symbols and a time domain start symbol location of the positioning data channel can be explicitly or implicitly indicated through the positioning control channel. When the implicit indication is that time domain configuration information of the two channels is the same (that is, the numbers of time domain symbols and the time domain start symbol positions are the same), the positioning control channel still needs to display the frequency domain configuration information (that is, a frequency domain start location and a frequency domain occupied bandwidth) indicating the positioning data channel. Alternatively, when frequency domain adjacent mapping is adopted for the two channels, and the implicit indication is that the time domain configuration information of the two channels is the same (that is, the numbers of time domain symbols and the time domain start symbol positions are the same), the positioning control channel only needs to display frequency domain occupied bandwidth information indicating the positioning data channel.

It should also be noted that the number of PRBs or the number of sub-channels occupied by the frequency domain of the positioning data channel may be indicated by the positioning control channel or configured or preconfigured by higher-layer parameters. A frequency domain start PRB may have different indication modes based on different resource pool configurations, for example:
(1) when the resource pool is configured to make the positioning data channel and the positioning control channel in adjacent mapping in a frequency domain, the frequency domain start PRB is implicitly a frequency domain PRB location adjacent to the positioning control channel; and
(2) when the resource pool is configured to make the positioning data channel and the positioning control channel in non-adjacent mapping in a frequency domain, the frequency domain start PRB needs to be explicitly indicated through the positioning control channel.

In some embodiments, a sidelink positioning physical layer channel structure applicable to sidelink transmission characteristics and resource allocation characteristics is provided in combination with the sidelink resource allocation characteristics and related contents of the sidelink positioning requirements.

In some embodiments of the present disclosure, the positioning scheduling information is used to schedule transmission of the positioning channel and/or the positioning data channel.

The positioning scheduling information includes at least one of the following:
SL-PRS indication information; positioning channel indication information; positioning data channel indication information; source identity ID information (that is, source ID); destination ID information (that is, destination ID); positioning data indicating bits, which may be used to indicate whether positioning data information is transmitted in the positioning channel; the positioning data information; and reserved bit information (that is, reserved bits).

That is to say, the sidelink positioning scheduling information may be used to schedule transmissions of the positioning channel, or to schedule transmissions of the positioning channel and the positioning data channel.

In some embodiments of the present disclosure, the sidelink positioning scheduling information can be divided into the following cases.

Case 1. When the first device only transmits the positioning control channel and the positioning channel, and the positioning channel is only used to transmit an SL-PRS, the positioning scheduling information carried by the positioning control channel may specifically include at least one of the following: sidelink PRS indication information (that is, SL-PRS indication information), a source ID, a destination ID, positioning data indication bits, positioning data information, and reserved bits.

Case 2. When the first device only transmits the positioning control channel and the positioning channel, and the positioning channel is used to transmit an SL-PRS and positioning data information, the positioning scheduling information carried by the positioning control channel may specifically include at least one of the following: positioning channel indication information, a source ID, a destination ID, positioning data indication bits, and reserved bits.

Case 3. When the first device transmits the positioning control channel, the positioning data channel and the positioning channel, the positioning scheduling information carried by the positioning control channel may specifically include at least one of the following: positioning channel indication information, positioning data channel indication information, a source ID, a destination ID, positioning data indication bits, and reserved bits.

The positioning data information includes at least one of the following:
(1) positioning measurement quantity type information used to indicate measurement quantities to be measured, for example, SL-PRS measure reference signal received power (RSRP), an SL-PRS transceiving time difference of a device, a relative time of arrival (RTOA), a reference signal time difference (RSTD), an angle of arrival (AoA), an angle of departure (AoD), a carrier phase, etc.;
(2) positioning assistance information, where the positioning assistance information includes at least one of the following: a speed, a moving direction, an acceleration, location coordinate information, an identity ID, synchronization signal and physical broadcast channel (PBCH) block (SL-SSB) time-frequency configuration information, first device related identity information, etc.;
(3) SL-PRS search assistance information which may specifically include: an expected reference signal time difference and a search window (corresponding to uncertainty of a transmission delay difference), where the expected reference signal time difference may be used as a reference for a time difference and a transmission delay difference of transmitting an SL-PRS between the first device and other neighboring devices, and the SL-PRS search assistance information may also be configured or preconfigured according to higher-layer parameters;
(4) positioning method information or positioning capability information used to indicate a method used in a current positioning procedure, for example, multi-RTT positioning, TDOA positioning, AOA positioning, AOD positioning, a carrier phase, etc.;
(5) positioning type information which may be used to distinguish whether the current positioning method is specifically used for relative positioning, ranging or absolute positioning;
(6) measurement window indication information which may specifically include information such as a start location and a period of the measurement window;
(7) positioning solution function indication information used to display and indicate whether a current device supports a positioning solution function, or indicate that a current device can only report measurement quantities for auxiliary positioning;
(8) measurement assistance information used to indicate SL-PRS information associated with a target device when measuring a device positioning measurement value and/or indicate reporting granularity of a device SL-PRS positioning measurement value, etc.; where
   the SL-PRS information includes at least one of the following: an SL-PRS resource set ID, an SL-PRS resource ID, SL-PRS specific time-frequency resource location information, SL-PRS configuration information, sequence initialization ID, etc.;
(9) a feedback delay limit which is used to indicate an upper limit of a positioning information feedback time, where a specific positioning feedback time should be less than the feedback delay limit;
(10) a time domain reference point;
(11) positioning measurement value information which may specifically include at least one of the following information: an RSTD reference signal time difference, SL-PRS RSRP, a first device transceiving time difference, a second device transceiving time difference, an SL-PRS signal to interference plus noise ratio (SINR) or signal noise ratio (SNR), an RTOA reference signal arrival time, an AOA, an AOD, a strongest path transmission delay, a time delay difference between multiple paths, a longitude, a latitude, an altitude, etc., where the strongest path transmission delay may assist in eliminating some erroneous distance estimates;
(12) timestamp information associated with the measurement value, where the timestamp information may specifically include a system frame number and a slot number, and is used to indicate a valid time of the measurement quantity;
(13) quality indication information of the measurement value which may specifically include at least one of the following: error resolution, an error value, and a number of error sampling points, where the error value may be combined with the error resolution for indication; and
(14) positioning measurement value identification information which may specifically include at least one of the following: SL-PRS related information for measurement, a timestamp of the SL-PRS, SL-PRS time domain location information for measurement (for example, a universal time coordinated (UTC), and further for example, a subframe number and a slot number), a measurement value interaction process ID, and a measurement value ID.

The SL-PRS related information for measurement may specifically include at least one of the following: a PRS sequence ID, a PRS resource ID, a sequence initialization ID, a PRS resource set ID, etc. The measurement value interaction process ID is mainly to guarantee that all information belonging to a same process can be correlated with each other.

In some embodiments of the present disclosure, the SL-PRS indication information includes at least one of the following:
SL-PRS priority information; SL-PRS frequency domain resource assignment information; SL-PRS time domain resource assignment information; pattern information of a time domain symbol location occupied by the SL-PRS; SL-PRS resource reservation period information; SL-PRS resource reservation period number information; SL-PRS port number information; offset slot number information (that is offset slot number), which indicates a time interval between the positioning control channel and the positioning channel scheduled by the positioning control channel; and first resource region related information.

In some embodiments of the present disclosure, the SL-PRS frequency domain resource assignment information includes at least one of the following:
SL-PRS start physical resource block (PRB) location information; SL-PRS start sub-channel location information; SL-PRS bandwidth information, for example, the number of PRBs or the number of sub-channels; SL-PRS comb size information, that is, an SL-PRS comb-size; SL-PRS start resource element (RE) location information; SL-PRS comb offset information, that is, an SL-PRS comb offset; SL-PRS cyclic shift information, that is, an SL-PRS cyclic shift; SL-PRS orthogonal cover code (OCC) information, that is, an SL-PRS OCC; and SL-PRS frequency domain pattern index information, that is, an SL-PRS frequency domain pattern index.

It should be noted that in a case that only inter-slot scheduling is supported between the positioning scheduling information and the time domain interval information of positioning channel associated with the positioning scheduling information, the SL-PRS frequency domain resource assignment information may include a parameter of offset slot number information.

In some embodiments of the present disclosure, the SL-PRS time domain resource assignment information includes at least one of the following:
location information of a slot occupied by the SL-PRS, specifically including a subframe Num and/or slot Num; start symbol location information of the SL-PRS in the slot; occupied symbol number information; and pattern information of a time domain symbol location occupied by the SL-PRS.

It should be noted that in a case that the resource pool supports SL-PRS discontinuous mapping in a time domain, the SL-PRS time domain resource assignment information needs to include the pattern information of a time domain symbol location occupied by the SL-PRS supported by the resource pool.

In some embodiments of the present disclosure, the positioning channel indication information includes at least one of the following:
positioning channel priority information; positioning channel frequency domain resource assignment information; positioning channel time domain resource assignment information; pattern information of a time domain symbol location occupied by the positioning channel; positioning channel resource reservation period information; positioning channel resource reservation period number information; SL-PRS port number information; offset slot number information, that is, an offset slot number; modulation and coding mode information; modulation and coding scheme (MCS) table indication information; new data indication information that is used to distinguish initial transmission and repeat; repeat time-frequency resource assignment indication information; redundant version information; hybrid automatic repeat request (HARQ) process number information; and first resource region related information.

It should be noted that in a case that the resource pool supports discontinuous mapping of the positioning channel in a time domain, the positioning channel indication information needs to include pattern information of a time domain symbol location occupied by the positioning channel and supported by the resource pool. In a case that the resource pool supports repeat, the positioning channel indication information needs to include the repeat time-frequency resource assignment indication information. Moreover, in a case that the positioning scheduling information and time domain interval information of a positioning channel associated with the positioning scheduling information only support inter-slot scheduling, the positioning channel indication information needs to include the offset slot number.

Each symbol and each PRB in the positioning channel may carry an SL-PRS.

In some embodiments of the present disclosure, the positioning channel frequency domain resource assignment information includes at least one of the following:
positioning channel start PRB location information; SL-PRS start sub-channel location information; positioning channel bandwidth information, for example, the number of PRBs or the number of sub-channels; SL-PRS comb size information (that is, an SL-PRS comb-size); SL-PRS start RE location information; SL-PRS comb offset information (that is, an SL-PRS comb offset); SL-PRS cyclic shift information (that is, an SL-PRS cyclic shift); SL-PRS OCC information (that is, an SL-PRS OCC); and SL-PRS frequency domain pattern index information (that is, an SL-PRS frequency domain pattern index).

In some embodiments of the present disclosure, the positioning channel time domain resource assignment information includes at least one of the following:
location information of a slot occupied by the positioning channel, specifically including a subframe Num and/or slot Num; start symbol location information of the positioning channel in the slot; and occupied symbol number information.

In some embodiments of the present disclosure, the positioning data channel indication information includes at least one of the following:
positioning data channel priority information; positioning data channel frequency domain resource assignment information; positioning data channel time domain resource assignment information; positioning data channel resource reservation period information; positioning data channel resource reservation period number information; demodulation reference signal (DMRS) port number information; DMRS pattern information, that is, a DMRS pattern; modulation and coding mode information; MCS table indication information; new data indication information that is used to distinguish initial transmission and repeat; repeat time-frequency resource assignment indication information; redundant version information; HARQ process number information; and first resource region related information.

In some embodiments of the present disclosure, the positioning data channel frequency domain resource assignment information includes at least one of the following:
positioning data channel start PRB location information; and positioning data channel bandwidth information, for example, the number of PRBs or the number of sub-channels.

It should be noted that in a case that the resource pool supports repeat, the positioning data channel indication information needs to include the repeat time-frequency resource assignment indication information.

In some embodiments of the present disclosure, the positioning data channel time domain resource assignment information includes at least one of the following:
location information of a slot occupied by the positioning data channel, specifically including a subframe Num and/or slot Num; start symbol location information of the positioning data channel in the slot; and occupied symbol number information.

In some embodiments of the present disclosure, the configuration information of the resource pool includes at least one of the following:
positioning channel configuration information; positioning control channel configuration information; positioning data channel configuration information; resource pool frequency domain start PRB location information; resource pool frequency domain occupied PRB number information; resource pool frequency domain sub-channel size information, that is, a resource pool frequency domain sub-channel size indicating the number of PRBs included in a sub-channel of a frequency domain of the resource pool; resource pool occupied sub-channel number information; and adjacent identity information of the positioning control channel and the positioning data channel.

It should be noted that the configuration information of the resource pool may be configured or preconfigured according to high-layer parameters.

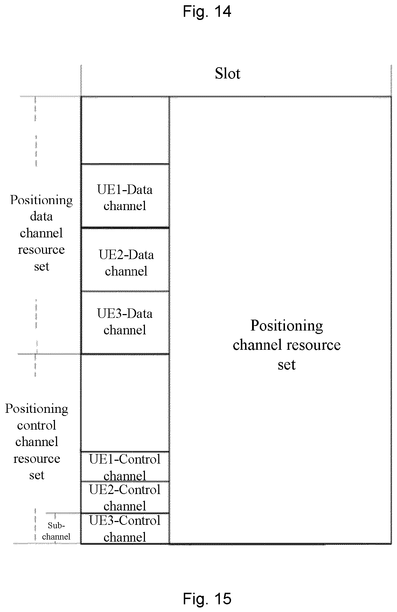

As shown in Fig. 15, as an embodiment of the present disclosure, when the first device transmits the positioning control channel or transmits the positioning control channel and the positioning data channel on the second resource pool, configuration information of the second resource pool may specifically include at least one of the following:
positioning control channel configuration information; positioning data channel configuration information; a second resource pool frequency domain start PRB location; a number of PRBs occupied by a frequency domain of the second resource pool; a second resource pool frequency domain sub-channel size; a number of sub-channels occupied by the second resource pool; and adjacent identity information of the positioning control channel and the positioning data channel, etc.

The configuration information of the second resource pool may be configured or preconfigured according to high-layer parameters.

In some embodiments of the present disclosure, the positioning channel configuration information includes:
(1) time domain offset value information (that is, offset slot number information), where
   it should be noted that in a case that the resource pool supports positioning scheduling information to inter-slot schedule positioning channels, the positioning channel configuration information should include offset slot number information that can be supported by the resource pool, and the offset slot number represents a time domain offset value between the positioning scheduling channel and the scheduling positioning channel;
(2) positioning channel time domain configuration information;
(3) positioning channel frequency domain configuration information;
(4) SL-PRS sequence information, where the sequence information includes sequence ID information and/or sequence type information, that is, SL-PRS sequence ID information, SL-PRS sequence type information, etc. supported by the resource pool, and the SL-PRS sequence type information may include a zc sequence, a gold sequence, etc.;
(5) SL-PRS resource type information, for example, a periodic resource, a aperiodic resource, and a semi-persistent resource;
(6) an SL-PRS period value;
(7) time domain offset value information of the SL-PRS in each SL-PRS period relative to a start location of the period, that is, time domain offset value information of the SL-PRS that can be supported in each period relative to the start location of the period;
(8) MCS table information of positioning data; and
(9) time-frequency resource location information used to transmit the positioning channel in a single slot of the resource pool.

Herein, the time-frequency resource location information may specifically include at least one of the following: a number of time domain symbols, a time domain start location, a number of frequency domain PRBs, and a frequency domain start location.

In some embodiments of the present disclosure, the positioning channel time domain configuration information includes at least one of the following:
SL-PRS time domain pattern information; positioning channel time domain pattern information; SL-PRS time domain start symbol location information; positioning channel time domain start symbol location information; SL-PRS time domain symbol number information; positioning channel time domain symbol number information; and pattern information of a time domain symbol location occupied by the SL-PRS.

It should be noted that in a case that the resource pool supports SL-PRS discontinuous mapping in a time domain, the positioning channel time domain configuration information needs to include pattern information of a time domain symbol location occupied by the SL-PRS supported by the resource pool.

In some embodiments of the present disclosure, the positioning channel frequency domain configuration information includes at least one of the following:
SL-PRS frequency domain pattern information which may specifically include at least one of the following: a start RE, a comb size, a comb offset, a cyclic shift, and an OCC; SL-PRS frequency domain start PRB location information; positioning channel frequency domain start PRB location information; SL-PRS frequency domain start sub-channel location information; positioning channel frequency domain start sub-channel location information; SL-PRS frequency domain occupied PRB number information; positioning channel frequency domain occupied PRB number information; SL-PRS frequency domain occupied sub-channel number information; positioning channel frequency domain occupied sub-channel number information; and SL-PRS frequency domain shift information which indicates the number of PRBs offset relative to a frequency-domain reference point.

In some embodiments of the present disclosure, the positioning control channel configuration information includes at least one of the following:
information of a number of symbols occupied by the positioning control channel in the resource pool in a time domain slot; information of a number of PRBs occupied by the positioning control channel in the resource pool in a frequency domain; initialization ID information of a demodulation reference signal (DMRS) sequence of the positioning control channel, for example, a DMRS scrambling ID or a radio network temporary identity (RNTI) scrambling ID, etc.; reserved bit number information; time-frequency resource location information used to transmit the positioning control channel in a slot of the resource pool; and pattern information of a time domain symbol location occupied by the positioning control channel.

It should be noted that in a case that the resource pool supports positioning control channel discontinuous mapping in a time domain, the positioning control channel configuration information needs to include pattern information of a time domain symbol location occupied by the positioning control channel supported by the resource pool.

In some embodiments of the present disclosure, the positioning data channel configuration information includes at least one of the following:
MCS table information of positioning data; information of a number of symbols occupied by one positioning data channel in the resource pool in a single time domain slot; period value information of the positioning data channel, that is, a period value of the positioning data channel supported by the resource pool; and time-frequency resource location information used to transmit the positioning data channel in a slot of the resource pool.

In some embodiments of the present disclosure, a first orthogonal frequency division multiplexing (OFDM) symbol on a time domain of the first channel is obtained in a first mode, and the first OFDM symbol is used to perform automatic gain control (AGC) processing.

The first mode includes at least one of the following:
an RE of a second OFDM symbol of the first channel is mapped repetitively; and a dedicated AGC reference signals (RS) is mapped.

That is to say, the first OFDM symbol in a time domain of the positioning channel, the positioning data channel and the positioning control channel may be used for AGC processing. A specific implementation mode includes at least one of the following: mode 1, the first OFDM symbol is obtained by repeatedly mapping an RE on the second start symbol; and mode 2, the first OFDM symbol maps the dedicated AGC-reference signal (RS).

In some embodiments of the present disclosure, a guard period (GP) is configured after a time domain end symbol of the first channel.

That is, one guard period (GP) should be reserved after end symbols of the time domain of the positioning channel, the positioning data channel and the positioning control channel. The guard period may be one OFDM symbol.

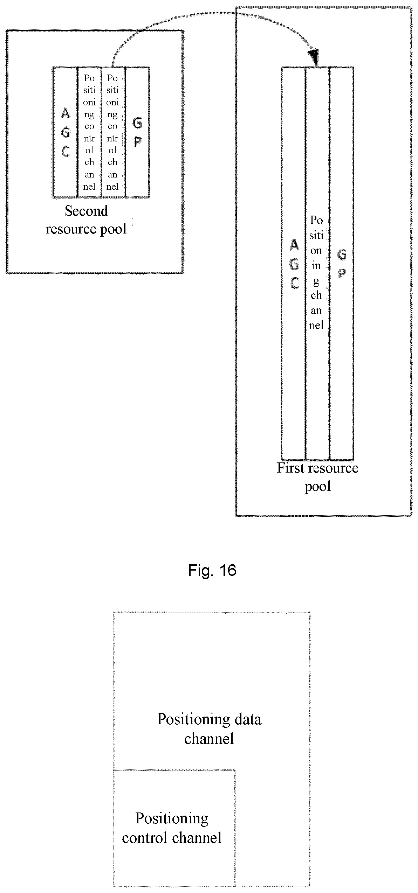

In some embodiments of the present disclosure, in a case that the positioning data channel is provided, an association between the positioning data channel and the positioning control channel includes at least one of the following:
(1) a number of PRBs jointly occupied by the positioning control channel and a first positioning data channel in a frequency domain is less than or equal to a sub-channel size, and the first positioning data channel is a positioning data channel scheduled by the positioning control channel;
(2) scheduling granularity of the positioning data channel in a frequency domain is a sub-channel;
(3) the number of PRBs jointly occupied by the positioning control channel and the first positioning data channel in the frequency domain is an integer multiple of a sub-channel size;
(4) a number of PRBs occupied by the positioning control channel in a frequency domain is less than or equal to the sub-channel size;
(5) the number of PRBs occupied by the positioning control channel in the frequency domain is equal to an integer multiple of the sub-channel size; and
(6) a start PRB location of the positioning control channel is a start PRB location of each sub-channel.
(7) The positioning data channel and the positioning control channel may have same time domain configuration information (for example, the numbers of time domain occupied symbols, the time domain positions, etc.), or not.
   As an embodiment of the present disclosure, Fig. 16 shows a multiplexing mode of the positioning control channel and the positioning data channel. The multiplexing mode of the positioning control channel and the positioning data channel in the first resource pool or the second resource pool may be a TDM multiplexing mode and a FDM multiplexing mode as shown in Fig. 16. It can be understood that the embodiment is not limited to the case that the number of time domain symbols of the positioning control channel and the positioning data channel is the same.
(8) The positioning data channel and the positioning control channel have a certain association in frequency domain mapping:
   when the positioning data channel and the positioning control channel are in adjacent mapping in a frequency domain, the frequency domain start PRB is implicitly a frequency domain PRB location adjacent to the positioning control channel; and
   when the positioning data channel and the positioning control channel are in non-adjacent mapping in a frequency domain, the frequency domain start PRB needs to be explicitly indicated through the positioning control channel.

As an embodiment of the present disclosure, mapping for each channel in a single logical slot in the resource pool is schematically illustrated as follows:
(I) When the first device transmits only the positioning channel, the positioning channel is only used to transmit an SL-PRS:
   frequency domain patterns of different SL-PRSs can be used by different devices for multi-user FDM multiplexing; and alternatively, different cyclic shifts or OCCs can be used by different users for CDM multiplexing or for TDM multiplexing.

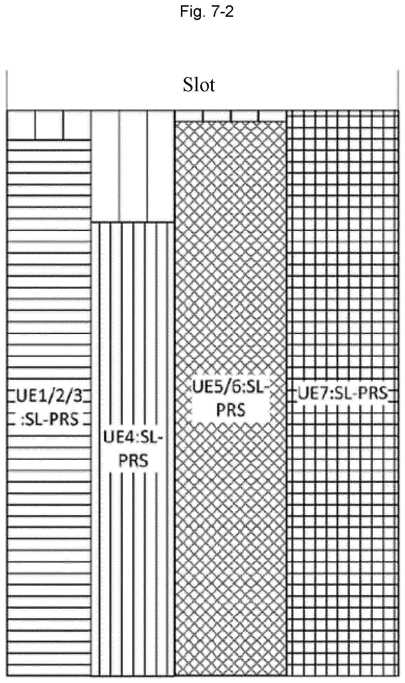

It should be noted that the frequency domain granularity of the SL-PRS may be PRB or sub-channel. The frequency domain start location of the SL-PRS may be configured or preconfigured according to higher-layer parameters. The number of time domain symbols and the time domain start symbol location of the positioning channel are indicated by the positioning scheduling information, alternatively, the number of time domain symbols is configured according to higher-layer parameters, and the entire slot is divided into specific time domain patterns. For example, as shown in Figs. 7-1 and 7-2, the entire slot is divided into four parts in a time domain, the first part and the second part fixedly occupy three symbols, and the third part and the fourth part fixedly occupy four symbols. When the device uses each resource, time domain configuration can follow this rule for resource selection.

(II) When the first device transmits only the positioning channel, the positioning channel is only used to transmit an SL-PRS and sidelink positioning data information:
since the positioning channel includes the SL-PRS and the positioning data, both of them have the same time-frequency resource location, where the SL-PRS adopts comb structure mapping, and the positioning data are mapped on an RE which are not occupied by the SL-PRS. During multi-user positioning channel multiplexing, the FDM multiplexing mode occupying different frequency bands may be adopted in a frequency domain, and alternatively, the TDM multiplexing mode may be adopted for different user positioning channels.

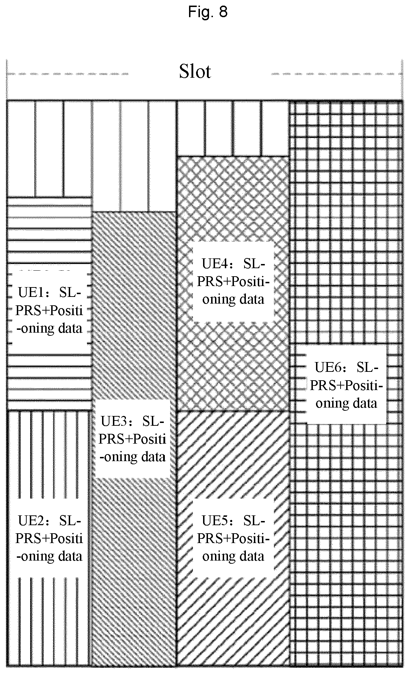

It should be noted that the frequency domain granularity of the positioning channel may be PRB or sub-channel. The frequency domain start location of the positioning channel and the number of PRBs or sub-channels occupied by the frequency domain may be indicated by means of the positioning scheduling information. The number of time domain symbols and the time domain start symbol location of the positioning channel may be indicated by the positioning scheduling information, alternatively, the number of time domain symbols is configured according to higher-layer parameters, and the entire slot is divided into specific time domain patterns. For example, as shown in Fig. 8, the entire slot is divided into four parts in a time domain, the first part and the second part fixedly occupy three symbols, and the third part and the fourth part fixedly occupy four symbols. When the device uses each resource, time domain configuration can follow this rule for resource selection.

(III) When the first device transmits the positioning control channel and the positioning channel:
the positioning control channels of different devices may occupy different sub-channels or PRBs, and are used to schedule respective positioning channels respectively. The positioning channels of different devices may adopt the TDM multiplexing mode.

It should be noted that in a case that the positioning channels of a plurality of devices only transmit the SL-PRS, the plurality of devices may use different SL-PRS frequency domain patterns for frequency division multiplexing (FDM). In a case that the positioning channels of the devices carry the SL-PRS and the positioning data, when a plurality of users perform FDM multiplexing, the SL-PRS and the positioning data can only be performed as a whole for FDM multiplexing. Whether the positioning channel transmitted from the device includes the positioning data may be indicated by the positioning scheduling information.

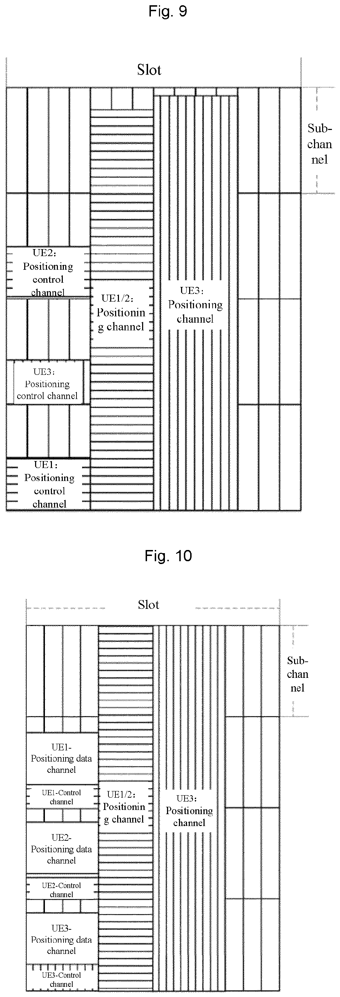

It should also be noted that the frequency domain start location of the positioning control channel is the start PRB location of the sub-channel. The number of PRBs occupied in the frequency domain of the positioning control channel may be configured or preconfigured according to higher-layer parameters. The number of time domain symbols and the time domain start symbol location of the positioning channel may be indicated by the positioning scheduling information, alternatively, the number of time domain symbols is configured according to higher-layer parameters, and the entire slot is divided into specific time domain patterns. For example, as shown in Fig. 9, resources available for positioning channel transmission in the time domain in the entire slot are divided into three parts for transmitting the positioning channel. The first part and the second part fixedly occupy three symbols and four symbols respectively, and the third part fixedly occupies three symbols. When the device uses each resource, time domain configuration can follow this rule for resource selection.

Sequence generation initialization of the SL-PRS in the positioning channel may be initialized based on information bits in the positioning scheduling information.

(IV) When the first device transmits the positioning control channel, the positioning data channel, and the positioning channel, and the positioning control channel is configured adjacent to the positioning data channel in the resource pool:
the positioning control channel and the positioning data channel of each device are mapped adjacently in a frequency domain, and the scheduling information carried by the positioning control channel may be used to indicate the positioning data channel and the positioning channel.

It should be noted that the number of time domain symbols and the time domain start symbol location of the positioning channel, the frequency domain PRB, the sub-channel occupied number, the frequency domain PRB start location, the sub-channel start location, etc. may be indicated by the positioning scheduling information, alternatively, the number of time domain symbols may be configured according to high-layer parameters, and the entire slot is divided into specific time domain patterns. For example, as shown in Fig. 10, time domain resources available for positioning channel transmission in the entire slot are divided into three parts for transmitting the positioning channel. The first part and the second part fixedly occupy three and four symbols, and the third part fixedly occupies three symbols. When the device uses each resource, time domain configuration can follow this rule for resource selection.

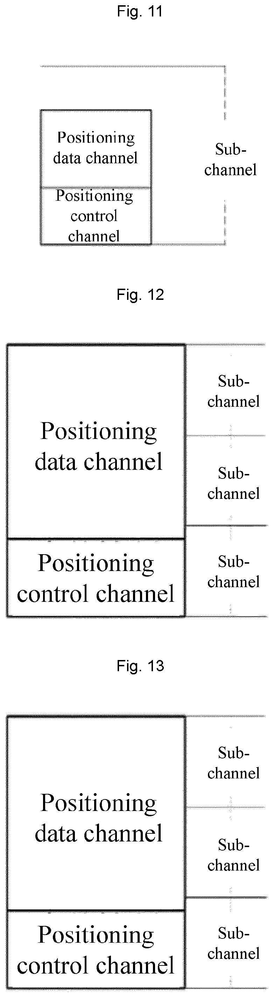

The frequency domain configuration of the positioning control channel and the positioning data channel may also conform to at least one of the following relations:
(1) As shown in Fig. 11, mapping of the positioning control channel and the positioning data channel in a frequency domain may fall within one sub-channel.
   A start PRB location of the positioning control channel is a start PRB location of each sub-channel.
(2) As shown in Fig. 12, a number of PRBs occupied by the positioning control channel in a frequency domain is less than or equal to the sub-channel size.

Scheduling granularity of the positioning data channel in a frequency domain is a sub-channel.

A start PRB location of the positioning control channel is a start PRB location of each sub-channel.

(3) As shown in Fig. 13, the number of PRBs occupied by the positioning control channel in the frequency domain is equal to an integer multiple of the sub-channel size.

Scheduling granularity of the positioning data channel in a frequency domain is a sub-channel.

(V) When the first device transmits the positioning control channel, the positioning data channel, and the positioning channel, and the positioning control channel is configured not adjacent to the positioning data channel in the resource pool:
as shown in Fig. 14, the positioning control channel and the positioning data channel are not adjacent, and the scheduling information carried by the positioning control channel is used to indicate configuration information of the positioning data channel and the positioning channel.

The frequency domain configuration of the positioning control channel and the positioning data channel may also conform to at least one of the following relations:
(1) A number of PRBs occupied by the positioning control channel in a frequency domain is less than or equal to the sub-channel size.

Scheduling granularity of the positioning data channel in a frequency domain is a sub-channel.

A start PRB location of the positioning control channel is a start PRB location of each sub-channel.

(2) The number of PRBs occupied by the positioning control channel in the frequency domain is equal to an integer multiple of the sub-channel size.

Scheduling granularity of the positioning data channel in a frequency domain is a sub-channel.

As an embodiment of the present disclosure, a complete slot may be used only to transmit a positioning control channel and a positioning channel of one device, or to transmit a positioning control channel, a positioning data channel and a positioning channel of one device.

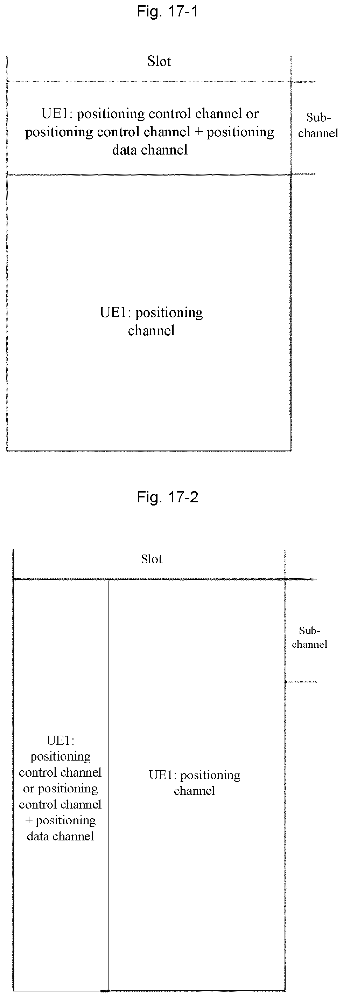

As shown in Fig. 17-1, the FDM multiplexing mode may be adopted for the positioning control channel and the positioning channel. As shown in Fig. 17-2, the TDM multiplexing mode may also be adopted for the positioning control channel and the positioning channel.

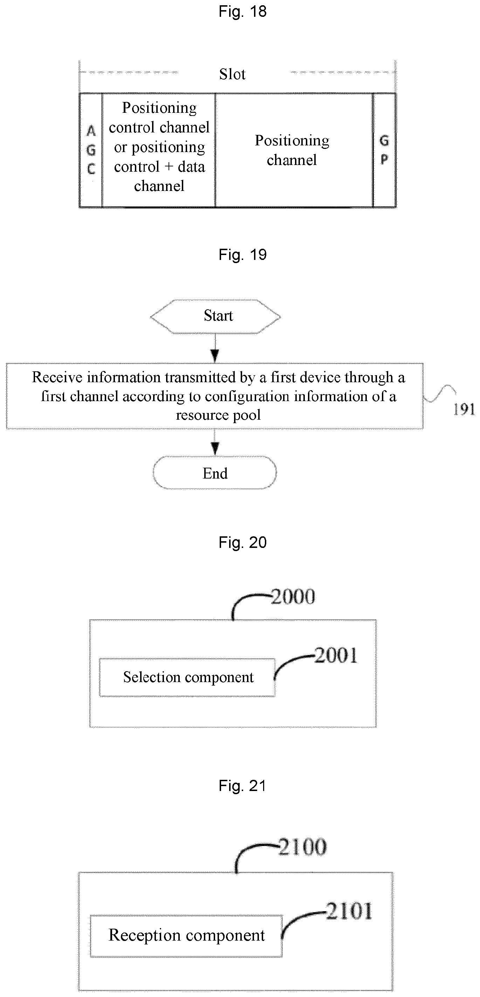

It should be noted that in a case that the frequency domain bandwidths of the positioning control channel and the positioning channel are different, the structure in the foregoing embodiments may be adopted. In a case that the frequency domain bandwidths of the positioning control channel and the positioning channel are the same, the GP symbol at the end of the positioning control channel and the AGC symbol at the start of the positioning channel are no longer required, the structure shown in Fig. 18 may be adopted, and the positioning control channel and the positioning channel scheduled by the positioning control channel occupy the entire slot.

In some embodiments of the present disclosure, according to the configuration information of the resource pool, a transmission resource can be selected for the first channel from the resource pool, such that first channel transmission on the transmission resource is implemented. The first channel includes at least one of the positioning channel, the positioning data channel and the positioning control channel. Different channels can be used to transmit positioning signals related to different sidelinks respectively. In this way, a resource configuration solution adapted to sidelink positioning is achieved. Collision probability of the positioning channel is reduced, transmission efficiency of the positioning channel is improved, and a positioning requirement of the sidelink is satisfied.

### Embodiment 2

As shown in Fig. 19, the embodiment of the present disclosure provides a method of resource configuration for a sidelink. The method is applied to a second device and specifically includes:

Step 191. Information transmitted by a first device through a first channel is received according to configuration information of a resource pool.

The first channel includes at least one of the following:
a positioning channel used to transmit an SL-PRS or transmit an SL-PRS and positioning data information; a positioning data channel used to transmit the positioning data information; and a positioning control channel used to transmit positioning scheduling information.

Herein, the positioning data information may be specifically understood as sidelink positioning data information. The positioning scheduling information may be specifically understood as sidelink positioning scheduling information.

In some embodiments, the configuration information of the resource pool may be configured or preconfigured by higher-layer parameters. The second device may receive the information transmitted by the first device through the first channel according to the configuration information of the resource pool.

A specific receiving process may include the following cases:
(1) An SL-PRS transmitted by the positioning channel, or an SL-PRS and positioning data information are received.
(2) Information transmitted by the positioning channel and the positioning control channel is received.
   In this process, the second device may first receive the positioning channel scheduling information transmitted by the positioning control channel, and then receive the SL-PRS, or the SL-PRS and the positioning data information transmitted by the positioning channel.
(3) Information transmitted by the positioning channel, the positioning control channel and the positioning data channel is received.

In this process, the second device may first receive the positioning channel scheduling information transmitted by the positioning control channel, and then receive the information transmitted by the positioning channel and the positioning data channel separately. The positioning channel is used to transmit the SL-PRS, and the positioning data channel is used to transmit sidelink positioning data information.

In some embodiments of the present disclosure, according to the configuration information of the resource pool, the information transmitted by the first device through the first channel can be received, such that first channel transmission on transmission resources is implemented. The first channel includes at least one of the positioning channel, the positioning data channel and the positioning control channel. Different channels can be used to transmit positioning signals related to different sidelinks respectively. In this way, a resource configuration solution adapted to sidelink positioning is achieved. Collision probability of the positioning channel is reduced, transmission efficiency of the positioning channel is improved, and a positioning requirement of the sidelink is satisfied.

### Embodiment 3

As shown in Fig. 20, the embodiment of the present disclosure provides an apparatus 2000 of resource configuration. The apparatus is applied to a first device and includes:
a selection component 2001 used to select a transmission resource for a first channel from a resource pool according to configuration information of the resource pool, where
the first channel includes at least one of the following:
   a positioning channel used to transmit a sidelink-positioning reference signal (SL-PRS) or transmit an SL-PRS and positioning data information;
   a positioning data channel used to transmit the positioning data information; and
   a positioning control channel used to transmit positioning scheduling information.

In some embodiments of the present disclosure, the selection component 2001 includes at least one of the following:
a first selection unit used to select the transmission resource for the positioning channel from a first resource region in a case that the first channel only includes the positioning channel, where the first resource region is one of resource sets of the resource pool;
a second selection unit used to select a first resource for the positioning channel from the first resource region in a case that the first channel includes the positioning channel and the positioning control channel, and select a second resource for the positioning control channel from the first resource region or a second resource region, where the second resource region is a resource set different from the first resource region in the resource pool;
a third selection unit used to select the first resource for the positioning channel from the first resource region in cases that the first channel includes the positioning channel, the positioning control channel and the positioning data channel, and resource mapping locations of the positioning data channel and the positioning control channel are adjacent in a frequency domain, select the second resource for the positioning control channel from the first resource region or the second resource region, and select a third resource for the positioning data channel from the first resource region or the second resource region; and
a fourth selection unit used to select the first resource for the positioning channel from the first resource region in cases that the first channel includes the positioning channel, the positioning control channel and the positioning data channel, and that the resource mapping locations of the positioning data channel and the positioning control channel are not adjacent in the frequency domain, select the second resource for the positioning control channel from the first resource region or the second resource region, and select the third resource for the positioning data channel from the first resource region or a third resource region, where the third resource region is a resource set different from the first resource region and the second resource region in the resource pool; where
the first resource, the second resource and the third resource are transmission resources in the resource pool.

In some embodiments of the present disclosure, the positioning scheduling information is used to schedule transmission of the positioning channel and/or the positioning data channel.

The positioning scheduling information includes at least one of the following:
SL-PRS indication information; positioning channel indication information; positioning data channel indication information; source identity ID information; destination ID information; positioning data indicating bit; the positioning data information; and reserved bit information.

In some embodiments of the present disclosure, the SL-PRS indication information includes at least one of the following:
SL-PRS priority information; SL-PRS frequency domain resource assignment information; SL-PRS time domain resource assignment information; pattern information of a time domain symbol location occupied by the SL-PRS; SL-PRS resource reservation period information; SL-PRS resource reservation period number information; SL-PRS port number information; offset slot number information; and first resource region related information.

In some embodiments of the present disclosure, the SL-PRS frequency domain resource assignment information includes at least one of the following:
SL-PRS start physical resource block (PRB) location information; SL-PRS start sub-channel location information; SL-PRS bandwidth information; SL-PRS comb size information; SL-PRS start resource element (RE) location information; SL-PRS comb offset information; SL-PRS cyclic shift information; SL-PRS orthogonal cover code (OCC) information; and SL-PRS frequency domain pattern index information.

The SL-PRS time domain resource assignment information includes at least one of the following:
location information of a slot occupied by the SL-PRS; start symbol location information of the SL-PRS in the slot; and occupied symbol number information.

In some embodiments of the present disclosure, the positioning channel indication information includes at least one of the following:
positioning channel priority information; positioning channel frequency domain resource assignment information; positioning channel time domain resource assignment information; pattern information of a time domain symbol location occupied by the positioning channel; positioning channel resource reservation period information; positioning channel resource reservation period number information; SL-PRS port number information; offset slot number information; modulation and coding mode information; modulation and coding scheme (MCS) table indication information; new data indication information; repeat time-frequency resource assignment indication information; redundant version information; hybrid automatic repeat request (HARQ) process number information; and first resource region related information.

In some embodiments of the present disclosure, the positioning channel frequency domain resource assignment information includes at least one of the following:
positioning channel start PRB location information; SL-PRS start sub-channel location information; positioning channel bandwidth information; SL-PRS comb size information; SL-PRS start RE location information; SL-PRS comb offset information; SL-PRS cyclic shift information; SL-PRS OCC information; and SL-PRS frequency domain pattern index information.

The positioning channel time domain resource assignment information includes at least one of the following:
location information of a slot occupied by the positioning channel; start symbol location information of the positioning channel in the slot; and occupied symbol number information.

In some embodiments of the present disclosure, the positioning data channel indication information includes at least one of the following:
positioning data channel priority information; positioning data channel frequency domain resource assignment information; positioning data channel time domain resource assignment information; positioning data channel resource reservation period information; positioning data channel resource reservation period number information; demodulation reference signal (DMRS) port number information; DMRS pattern information; modulation and coding mode information; MCS table indication information; new data indication information; repeat time-frequency resource assignment indication information; redundant version information; HARQ process number information; and first resource region related information.

In some embodiments of the present disclosure, the positioning data channel frequency domain resource assignment information includes at least one of the following:
positioning data channel start PRB location information; and positioning data channel bandwidth information.

The positioning data channel time domain resource assignment information includes at least one of the following:
location information of a slot occupied by the positioning data channel; start symbol location information of the positioning data channel in the slot; and occupied symbol number information.

In some embodiments of the present disclosure, the configuration information of the resource pool includes at least one of the following:
positioning channel configuration information; positioning control channel configuration information; positioning data channel configuration information; resource pool frequency domain start PRB location information; resource pool frequency domain occupied PRB number information; resource pool frequency domain sub-channel size information; resource pool occupied sub-channel number information; and adjacent identity information of the positioning control channel and the positioning data channel.

In some embodiments of the present disclosure, the positioning channel configuration information includes:
time domain offset value information; positioning channel time domain configuration information; positioning channel frequency domain configuration information; SL-PRS sequence information, where the sequence information includes sequence ID information and/or sequence type information; SL-PRS resource type information; an SL-PRS period value; time domain offset value information of the SL-PRS in each SL-PRS period relative to a start location of the period; MCS table information of positioning data; time-frequency resource location information used to transmit the positioning channel in a single slot of the resource pool.

In some embodiments of the present disclosure, the positioning channel time domain configuration information includes at least one of the following:
SL-PRS time domain pattern information; positioning channel time domain pattern information; SL-PRS time domain start symbol location information; positioning channel time domain start symbol location information; SL-PRS time domain symbol number information; positioning channel time domain symbol number information; and pattern information of a time domain symbol location occupied by the SL-PRS.

In some embodiments of the present disclosure, the positioning channel frequency domain configuration information includes at least one of the following:
SL-PRS frequency domain pattern information; SL-PRS frequency domain start PRB location information; positioning channel frequency domain start PRB location information; SL-PRS frequency domain start sub-channel location information; positioning channel frequency domain start sub-channel location information; SL-PRS frequency domain occupied PRB number information; positioning channel frequency domain occupied PRB number information; SL-PRS frequency domain occupied sub-channel number information; positioning channel frequency domain occupied sub-channel number information; and SL-PRS frequency domain shift information.

In some embodiments of the present disclosure, the positioning control channel configuration information includes at least one of the following:
information of a number of symbols occupied by the positioning control channel in the resource pool in a time domain slot; information of a number of PRBs occupied by the positioning control channel in the resource pool in a frequency domain; initialization ID information of a demodulation reference signal (DMRS) sequence of the positioning control channel; reserved bit number information; time-frequency resource location information used to transmit the positioning control channel in a slot of the resource pool; and pattern information of a time domain symbol location occupied by the positioning control channel.

In some embodiments of the present disclosure, the positioning data channel configuration information includes at least one of the following:
MCS table information of positioning data; information of a number of symbols occupied by one positioning data channel in the resource pool in a single time domain slot; period value information of the positioning data channel; and time-frequency resource location information used to transmit the positioning data channel in a slot of the resource pool.

In some embodiments of the present disclosure, a first orthogonal frequency division multiplexing (OFDM) symbol on a time domain of the first channel is obtained in a first mode, and the first OFDM symbol is used to perform automatic gain control (AGC) processing.

The first mode includes at least one of the following:
an RE of a second OFDM symbol of the first channel is mapped repetitively; and
a dedicated AGC reference signals (RS) is mapped.

In some embodiments of the present disclosure, a guard period (GP) is configured after a time domain end symbol of the first channel.

In some embodiments of the present disclosure, an association between the positioning data channel and the positioning control channel includes at least one of the following:
a number of PRBs jointly occupied by the positioning control channel and a first positioning data channel in a frequency domain is less than or equal to a sub-channel size, and the first positioning data channel is a positioning data channel scheduled by the positioning control channel;
scheduling granularity of the positioning data channel in a frequency domain is a sub-channel;
the number of PRBs jointly occupied by the positioning control channel and the first positioning data channel in the frequency domain is an integer multiple of a sub-channel size;
a number of PRBs occupied by the positioning control channel in a frequency domain is less than or equal to the sub-channel size;
the number of PRBs occupied by the positioning control channel in the frequency domain is equal to an integer multiple of the sub-channel size; and
a start PRB location of the positioning control channel is a start PRB location of each sub-channel.

Embodiment 3 of the present disclosure corresponds to the method of Embodiment 1. All the implementation means in Embodiment 1 are applicable to the embodiment of the apparatus of resource configuration, and the same technical effect can be achieved.

### Embodiment 4

As shown in Fig. 21, the embodiment of the present disclosure provides an apparatus 2100 of resource configuration. The apparatus is applied to a second device and includes:
a reception component 2101 used to receive information transmitted by a first device through a first channel according to configuration information of a resource pool, where
the first channel includes at least one of the following:
   a positioning channel used to transmit an SL-PRS or transmit an SL-PRS and positioning data information;
   a positioning data channel used to transmit the positioning data information; and
   a positioning control channel used to transmit positioning scheduling information.

Embodiment 4 of the present disclosure corresponds to the method of Embodiment 2. All the implementation means in Embodiment 2 are applicable to the embodiment of the apparatus of resource configuration, and the same technical effect can be achieved.

### Embodiment 5

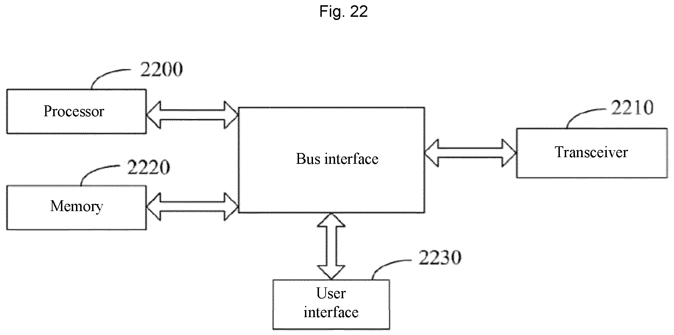

In order to better achieve the above objective, as shown in Fig. 22, Embodiment 5 of the present disclosure further provides a device. The device is a first device, and includes:
a processor 2200, and a memory 2220 connected to the processor 2200 through a bus interface. The memory 2220 is used to store a program and data used by the processor 2200 when executing operations. The processor 2200 calls and executes the program and data stored in the memory 2220.

A transceiver 2210 is connected to the bus interface for receiving and transmitting data under control of the processor 2200. The processor 2200 is used to read the program in the memory 2220 and execute the following steps:
a transmission resource is selected for a first channel from a resource pool according to configuration information of the resource pool, where
the first channel includes at least one of the following:
   a positioning channel used to transmit a sidelink-positioning reference signal (SL-PRS) or transmit an SL-PRS and positioning data information;
   a positioning data channel used to transmit the positioning data information; and
   a positioning control channel used to transmit positioning scheduling information.

In Fig. 22, the bus architecture may include any number of interconnected buses and bridges, which are specifically linked together through various circuits of one or more processors represented by the processor 2200, and a memory represented by the memory 2220. The bus architecture may also link various other circuits, such as peripheral devices, voltage regulators, and power management circuits, which are well known in the art, so they will not be further described herein. The bus interface provides an interface. A transceiver 2210 may include a plurality of elements, that is, the transceiver includes a transmitter and a receiver for providing units used to communicate with various other apparatuses over a transmission medium. For different terminals, a user interface 2230 may also be an interface that enables external and internal connection to desired devices, including, but not limited to, a keypad, a display, a speaker, a microphone, a joystick, etc. The processor 2200 is used to manage the bus architecture and general processing. The memory 2220 may store data used by the processor 2200 during operations.

In some embodiments of the present disclosure, when the processor 2200 is used to select a transmission resource for the first channel from the resource pool according to the configuration information of the resource pool, the processor is specifically used to:
select the transmission resource for the positioning channel from a first resource region in a case that the first channel only includes the positioning channel, where the first resource region is one of resource sets of the resource pool;
select a first resource for the positioning channel from the first resource region in a case that the first channel includes the positioning channel and the positioning control channel, and select a second resource for the positioning control channel from the first resource region or a second resource region, where the second resource region is a resource set different from the first resource region in the resource pool;
select the first resource for the positioning channel from the first resource region in cases that the first channel includes the positioning channel, the positioning control channel and the positioning data channel, and resource mapping locations of the positioning data channel and the positioning control channel are adjacent in a frequency domain, select the second resource for the positioning control channel from the first resource region or the second resource region, and select a third resource for the positioning data channel from the first resource region or the second resource region; and
select the first resource for the positioning channel from the first resource region in cases that the first channel includes the positioning channel, the positioning control channel and the positioning data channel, and that the resource mapping locations of the positioning data channel and the positioning control channel are not adjacent in the frequency domain, select the second resource for the positioning control channel from the first resource region or the second resource region, and select the third resource for the positioning data channel from the first resource region or a third resource region, where the third resource region is a resource set different from the first resource region and the second resource region in the resource pool; where
the first resource, the second resource and the third resource are transmission resources in the resource pool.

In some embodiments of the present disclosure, the positioning scheduling information is used to schedule transmission of the positioning channel and/or the positioning data channel.

The positioning scheduling information includes at least one of the following:
SL-PRS indication information; positioning channel indication information; positioning data channel indication information; source identity ID information; destination ID information; positioning data indicating bit; the positioning data information; and reserved bit information.

In some embodiments of the present disclosure, the SL-PRS indication information includes at least one of the following:
SL-PRS priority information; SL-PRS frequency domain resource assignment information; SL-PRS time domain resource assignment information; pattern information of a time domain symbol location occupied by the SL-PRS; SL-PRS resource reservation period information; SL-PRS resource reservation period number information; SL-PRS port number information; offset slot number information; and first resource region related information.

In some embodiments of the present disclosure, the SL-PRS frequency domain resource assignment information includes at least one of the following:
SL-PRS start physical resource block (PRB) location information; SL-PRS start sub-channel location information; SL-PRS bandwidth information; SL-PRS comb size information; SL-PRS start resource element (RE) location information; SL-PRS comb offset information; SL-PRS cyclic shift information; SL-PRS orthogonal cover code (OCC) information; and SL-PRS frequency domain pattern index information.

The SL-PRS time domain resource assignment information includes at least one of the following:
location information of a slot occupied by the SL-PRS; start symbol location information of the SL-PRS in the slot; and occupied symbol number information.

In some embodiments of the present disclosure, the positioning channel indication information includes at least one of the following:
positioning channel priority information; positioning channel frequency domain resource assignment information; positioning channel time domain resource assignment information; pattern information of a time domain symbol location occupied by the positioning channel; positioning channel resource reservation period information; positioning channel resource reservation period number information; SL-PRS port number information; offset slot number information; modulation and coding mode information; modulation and coding scheme (MCS) table indication information; new data indication information; repeat time-frequency resource assignment indication information; redundant version information; hybrid automatic repeat request (HARQ) process number information; and first resource region related information.

In some embodiments of the present disclosure, the positioning channel frequency domain resource assignment information includes at least one of the following:
positioning channel start PRB location information; SL-PRS start sub-channel location information; positioning channel bandwidth information; SL-PRS comb size information; SL-PRS start RE location information; SL-PRS comb offset information; SL-PRS cyclic shift information; SL-PRS OCC information; and SL-PRS frequency domain pattern index information.

The positioning channel time domain resource assignment information includes at least one of the following:
location information of a slot occupied by the positioning channel; start symbol location information of the positioning channel in the slot; and occupied symbol number information.

In some embodiments of the present disclosure, the positioning data channel indication information includes at least one of the following:
positioning data channel priority information; positioning data channel frequency domain resource assignment information; positioning data channel time domain resource assignment information; positioning data channel resource reservation period information; positioning data channel resource reservation period number information; demodulation reference signal (DMRS) port number information; DMRS pattern information; modulation and coding mode information; MCS table indication information; new data indication information; repeat time-frequency resource assignment indication information; redundant version information; HARQ process number information; and first resource region related information.

In some embodiments of the present disclosure, the positioning data channel frequency domain resource assignment information includes at least one of the following:
positioning data channel start PRB location information; and positioning data channel bandwidth information.

The positioning data channel time domain resource assignment information includes at least one of the following:
location information of a slot occupied by the positioning data channel; start symbol location information of the positioning data channel in the slot; and occupied symbol number information.

In some embodiments of the present disclosure, the configuration information of the resource pool includes at least one of the following:
positioning channel configuration information; positioning control channel configuration information; positioning data channel configuration information; resource pool frequency domain start PRB location information; resource pool frequency domain occupied PRB number information; resource pool frequency domain sub-channel size information; resource pool occupied sub-channel number information; and adjacent identity information of the positioning control channel and the positioning data channel.

In some embodiments of the present disclosure, the positioning channel configuration information includes:
time domain offset value information; positioning channel time domain configuration information; positioning channel frequency domain configuration information; SL-PRS sequence information, where the sequence information includes sequence ID information and/or sequence type information; SL-PRS resource type information; an SL-PRS period value; time domain offset value information of the SL-PRS in each SL-PRS period relative to a start location of the period; MCS table information of positioning data; time-frequency resource location information used to transmit the positioning channel in a single slot of the resource pool.

In some embodiments of the present disclosure, the positioning channel time domain configuration information includes at least one of the following:
SL-PRS time domain pattern information; positioning channel time domain pattern information; SL-PRS time domain start symbol location information; positioning channel time domain start symbol location information; SL-PRS time domain symbol number information; positioning channel time domain symbol number information; and pattern information of a time domain symbol location occupied by the SL-PRS.

In some embodiments of the present disclosure, the positioning channel frequency domain configuration information includes at least one of the following:
SL-PRS frequency domain pattern information; SL-PRS frequency domain start PRB location information; positioning channel frequency domain start PRB location information; SL-PRS frequency domain start sub-channel location information; positioning channel frequency domain start sub-channel location information; SL-PRS frequency domain occupied PRB number information; positioning channel frequency domain occupied PRB number information; SL-PRS frequency domain occupied sub-channel number information; positioning channel frequency domain occupied sub-channel number information; and SL-PRS frequency domain shift information.

In some embodiments of the present disclosure, the positioning control channel configuration information includes at least one of the following:
information of a number of symbols occupied by the positioning control channel in the resource pool in a time domain slot; information of a number of PRBs occupied by the positioning control channel in the resource pool in a frequency domain; initialization ID information of a demodulation reference signal (DMRS) sequence of the positioning control channel; reserved bit number information; time-frequency resource location information used to transmit the positioning control channel in a slot of the resource pool; and pattern information of a time domain symbol location occupied by the positioning control channel.

In some embodiments of the present disclosure, the positioning data channel configuration information includes at least one of the following:
MCS table information of positioning data; information of a number of symbols occupied by one positioning data channel in the resource pool in a single time domain slot; period value information of the positioning data channel; and time-frequency resource location information used to transmit the positioning data channel in a slot of the resource pool.

In some embodiments of the present disclosure, a first orthogonal frequency division multiplexing (OFDM) symbol on a time domain of the first channel is obtained in a first mode, and the first OFDM symbol is used to perform automatic gain control (AGC) processing.

The first mode includes at least one of the following:
an RE of a second OFDM symbol of the first channel is mapped repetitively; and a dedicated AGC reference signals (RS) is mapped.

In some embodiments of the present disclosure, a guard period (GP) is configured after a time domain end symbol of the first channel.

In some embodiments of the present disclosure, an association between the positioning data channel and the positioning control channel includes at least one of the following:
a number of PRBs jointly occupied by the positioning control channel and a first positioning data channel in a frequency domain is less than or equal to a sub-channel size, and the first positioning data channel is a positioning data channel scheduled by the positioning control channel; scheduling granularity of the positioning data channel in a frequency domain is a sub-channel; the number of PRBs jointly occupied by the positioning control channel and the first positioning data channel in the frequency domain is an integer multiple of a sub-channel size; a number of PRBs occupied by the positioning control channel in a frequency domain is less than or equal to the sub-channel size; the number of PRBs occupied by the positioning control channel in the frequency domain is equal to an integer multiple of the sub-channel size; and a start PRB location of the positioning control channel is a start PRB location of each sub-channel.

According to the configuration information of the resource pool, the device provided in the present disclosure can select a transmission resource for the first channel from the resource pool, so as to implement first channel transmission on the transmission resource. The first channel includes at least one of the positioning channel, the positioning data channel and the positioning control channel. Different channels can be used to transmit positioning signals related to different sidelinks respectively. In this way, a resource configuration solution adapted to sidelink positioning is achieved. Collision probability of the positioning channel is reduced, transmission efficiency of the positioning channel is improved, and a positioning requirement of the sidelink is satisfied.

### Embodiment 6

In order to better achieve the above objective, Embodiment 6 of the present disclosure further provides a device. The device is a second device, and may adopt a same structure as that of the first device as shown in Fig. 22. The device includes:
a processor 2200, and a memory 2220 connected to the processor 2200 through a bus interface. The memory 2220 is used to store a program and data used by the processor 2200 when executing operations. The processor 2200 calls and executes the program and data stored in the memory 2220.

A transceiver 2210 is connected to the bus interface for receiving and transmitting data under control of the processor 2200. The processor 2200 is used to read the program in the memory 2220 and execute the following steps:
information transmitted by a first device through a first channel is received according to configuration information of a resource pool, where
the first channel includes at least one of the following:
   a positioning channel used to transmit an SL-PRS or transmit an SL-PRS and positioning data information;
   a positioning data channel used to transmit the positioning data information; and
   a positioning control channel used to transmit positioning scheduling information.

In Fig. 22, the bus architecture may include any number of interconnected buses and bridges, which are specifically linked together through various circuits of one or more processors represented by the processor 2200, and a memory represented by the memory 2220. The bus architecture may also link various other circuits, such as peripheral devices, voltage regulators, and power management circuits, which are well known in the art, so they will not be further described herein. The bus interface provides an interface. A transceiver 2210 may include a plurality of elements, that is, the transceiver includes a transmitter and a receiver for providing units used to communicate with various other apparatuses over a transmission medium. For different terminals, a user interface 2230 may also be an interface that enables external and internal connection to desired devices, including, but not limited to, a keypad, a display, a speaker, a microphone, a joystick, etc. The processor 2200 is used to manage the bus architecture and general processing. The memory 2220 may store data used by the processor 2200 during operations.

According to the configuration information of the resource pool, the device provided in the present disclosure can receive the information transmitted by the first device through the first channel, so as to implement first channel transmission on transmission resources. The first channel includes at least one of the positioning channel, the positioning data channel and the positioning control channel. Different channels can be used to transmit positioning signals related to different sidelinks respectively. In this way, a resource configuration solution adapted to sidelink positioning is achieved. Collision probability of the positioning channel is reduced, transmission efficiency of the positioning channel is improved, and a positioning requirement of the sidelink is satisfied.

Those skilled in the art will appreciate that all or some of the steps for implementing the above embodiments may be completed by hardware, and may also be completed by instructing related hardware through a computer program. The computer program includes an instruction for executing some or all of the steps of the above method. The computer program may be stored in a readable storage medium. The storage medium may be a storage medium of any form.

Moreover, specific embodiments of the present disclosure also provide a computer-readable storage medium, storing a computer program. The program implements steps of the method in Embodiment 1 as described above, or implements steps of the method in Embodiment 2 as described above when executed by a processor, and achieves same technical effects, which will not be repeated herein to avoid repetition.

Furthermore, it should be noted that in the apparatus and method of the present disclosure, it is apparent that various components or steps may be disassembled and/or recombined. These disassembly and/or recombinations should be considered as equivalent solutions of the present disclosure. Moreover, steps of the series of processes described above may naturally be executed in chronological order in the order illustrated, but need not necessarily be executed in chronological order, and some steps may be executed in parallel or independently of each other. It can be understood by those of ordinary skill in the art that all or any of the steps or elements of the method and apparatus of the present disclosure may be implemented with hardware, firmware, software, or their combinations in any computing apparatus (including a processor, a storage media, etc.) or a network of a computing apparatus by those of ordinary skill in the art using their basic programming skills upon reading the description of the present disclosure.

Accordingly, the object of the present disclosure may also be achieved by running a program or a set of programs on any computing apparatus. The computing apparatus may be a well-known general purpose apparatus. Thus, the object of the present disclosure may also be achieved simply by providing a program product including a program code implementing the method or apparatus. That is to say, such a program product also constitutes the present disclosure, and a storage medium storing such a program product also constitutes the present disclosure. Apparently, the storage medium may be any known storage medium or any storage medium developed in the future. It should also be noted that in the apparatus and method of the present disclosure, it is apparent that various components or steps may be disassembled and/or recombined. These disassembly and/or recombinations should be considered as equivalent solutions of the present disclosure. Moreover, steps of the series of processes described above may naturally be executed in chronological order in the order illustrated, but need not necessarily be executed in chronological order. Some steps may be executed in parallel or independently.

It should be noted that it should be understood that the division of the above components is only a division of logical functions, which can be fully or partially integrated into a physical entity or physically separated. These components may be implemented entirely in a manner of software calling through processing elements, entirely in a form of hardware, partially in the manner of software calling through processing elements, and partially in the form of hardware. For example, the determination component may be a processing element separately provided, may be integrated into a chip of the apparatus, may also be stored in a memory of the apparatus in a form of a program code and called by a processing element of the apparatus to execute the function of the determination component. Implementation of other components is similar. Moreover, all or some of these components can be integrated together or implemented independently. The processing element described herein may be an integrated circuit having a signal processing capacity. During implementation, all the steps of the method described above or the components described above can be completed through an integrated logic circuit of hardware or instructions in the form of software in the processor element.

For example, each component, unit, sub-unit, or sub-component may be one or more integrated circuits configured to implement the above methods, such as one or more application specific integrated circuits (ASICs), or one or more digital signal processors (DSPs), or one or more field programmable gate arrays (FPGAs), etc. For another example, when a certain component is implemented in a manner of scheduling a program code by a processing element, the processing element may be a general purpose processor, such as a central processing unit (CPU) or other processor capable of calling the program code. As another example, these components can be integrated together in a form of a system-on-a-chip (SOC).

The terms "first", "second" and so forth, in the specification and claims of the present disclosure, are used to distinguish between similar objects, instead of necessarily describing a particular order or sequential order. It should be understood that the data used in this way may be interchanged where appropriate, such that the embodiments of the present disclosure described herein are, for example, implemented in other sequences than those illustrated or described herein. Furthermore, the terms "comprise", "include", "have", and their any variations are intended to cover non-exclusive inclusions. For example, a process, method, system, product, or device that includes a series of steps or units is not necessarily limited to those explicitly listed steps or units, but may include other steps or units not explicitly listed or inherent to the process, method, product, or device. Furthermore, the use of "and/or" in the specification and claims indicates at least one of connected objects. For example, A and/or B and/or C indicates seven situations of including A alone, B alone, C alone, both A and B, both B and C, both A and C, and A, B, and C. Similarly, the use of "at least one of A and B" in the specification and in the claims should be understood as "A alone, B alone, or both A and B".

What are described above are preferred embodiments of the present disclosure. It should be pointed out that those of ordinary skill in the art can make several improvements and modifications without departing from the principles of the present disclosure, and these improvements and modifications should also be deemed as falling within the scope of protection of the present disclosure.

## Claims

1. A method of resource configuration for a sidelink, applied to a first device, comprising:
selecting a transmission resource for a first channel from a resource pool according to configuration information of the resource pool, wherein
the first channel comprises at least one of the following:
a positioning channel used to transmit a sidelink-positioning reference signal (SL-PRS) or transmit an SL-PRS and positioning data information;
a positioning data channel used to transmit the positioning data information; and
a positioning control channel used to transmit positioning scheduling information.

2. The method as claimed in claim 1, wherein the selecting the transmission resource for the first channel from the resource pool according to configuration information of the resource pool comprises at least one of the following:
selecting the transmission resource for the positioning channel from a first resource region in a case that the first channel only comprises the positioning channel, wherein the first resource region is one of resource sets of the resource pool;
selecting a first resource for the positioning channel from the first resource region in a case that the first channel comprises the positioning channel and the positioning control channel, and selecting a second resource for the positioning control channel from the first resource region or a second resource region, wherein the second resource region is a resource set different from the first resource region in the resource pool;
selecting the first resource for the positioning channel from the first resource region in cases that the first channel comprises the positioning channel, the positioning control channel and the positioning data channel, and resource mapping locations of the positioning data channel and the positioning control channel are adjacent in a frequency domain, selecting the second resource for the positioning control channel from the first resource region or the second resource region, and selecting a third resource for the positioning data channel from the first resource region or the second resource region; and
selecting the first resource for the positioning channel from the first resource region in cases that the first channel comprises the positioning channel, the positioning control channel and the positioning data channel, and that the resource mapping locations of the positioning data channel and the positioning control channel are not adjacent in the frequency domain, selecting the second resource for the positioning control channel from the first resource region or the second resource region, and selecting the third resource for the positioning data channel from the first resource region or a third resource region, wherein the third resource region is a resource set different from the first resource region and the second resource region in the resource pool; wherein
the first resource, the second resource and the third resource are transmission resources in the resource pool.

3. The method as claimed in claim 1, wherein the positioning scheduling information is used to schedule transmission of the positioning channel and/or the positioning data channel, and
the positioning scheduling information comprises at least one of the following:
SL-PRS indication information;
positioning channel indication information;
positioning data channel indication information;
source identity ID information;
destination ID information;
positioning data indicating bit;
the positioning data information; and
reserved bit information.

4. The method as claimed in claim 3, wherein the SL-PRS indication information comprises at least one of the following:
SL-PRS priority information;
SL-PRS frequency domain resource assignment information;
SL-PRS time domain resource assignment information;
pattern information of a time domain symbol location occupied by the SL-PRS;
SL-PRS resource reservation period information;
SL-PRS resource reservation period number information;
SL-PRS port number information;
offset slot number information; and
first resource region related information.

5. The method as claimed in claim 4, wherein the SL-PRS frequency domain resource assignment information comprises at least one of the following:
SL-PRS start physical resource block (PRB) location information;
SL-PRS start sub-channel location information;
SL-PRS bandwidth information;
SL-PRS comb size information;
SL-PRS start resource element (RE) location information;
SL-PRS comb offset information;
SL-PRS cyclic shift information;
SL-PRS orthogonal cover code (OCC) information; and
SL-PRS frequency domain pattern index information; and
the SL-PRS time domain resource assignment information comprises at least one of the following:
location information of a slot occupied by the SL-PRS;
start symbol location information of the SL-PRS in the slot; and
occupied symbol number information.

6. The method as claimed in claim 3, wherein the positioning channel indication information comprises at least one of the following:
positioning channel priority information;
positioning channel frequency domain resource assignment information;
positioning channel time domain resource assignment information;
pattern information of a time domain symbol location occupied by the positioning channel;
positioning channel resource reservation period information;
positioning channel resource reservation period number information;
SL-PRS port number information;
offset slot number information;
modulation and coding mode information;
modulation and coding scheme (MCS) table indication information;
new data indication information;
repeat time-frequency resource assignment indication information;
redundant version information;
hybrid automatic repeat request (HARQ) process number information; and
first resource region related information.

7. The method as claimed in claim 6, wherein the positioning channel frequency domain resource assignment information comprises at least one of the following:
positioning channel start **PRB** location information;
SL-PRS start sub-channel location information;
positioning channel bandwidth information;
SL-PRS comb size information;
SL-PRS start RE location information;
SL-PRS comb offset information;
SL-PRS cyclic shift information;
SL-PRS OCC information; and
SL-PRS frequency domain pattern index information; and
the positioning channel time domain resource assignment information comprises at least one of the following:
location information of a slot occupied by the positioning channel;
start symbol location information of the positioning channel in the slot; and
occupied symbol number information.

8. The method as claimed in claim 3, wherein the positioning data channel indication information comprises at least one of the following:
positioning data channel priority information;
positioning data channel frequency domain resource assignment information;
positioning data channel time domain resource assignment information;
positioning data channel resource reservation period information;
positioning data channel resource reservation period number information;
demodulation reference signal (DMRS) port number information;
DMRS pattern information;
modulation and coding mode information;
MCS table indication information;
new data indication information;
repeat time-frequency resource assignment indication information;
redundant version information;
HARQ process number information; and
first resource region related information.

9. The method as claimed in claim 8, wherein the positioning data channel frequency domain resource assignment information comprises at least one of the following:
positioning data channel start PRB location information; and
positioning data channel bandwidth information; and
the positioning data channel time domain resource assignment information comprises at least one of the following:
location information of a slot occupied by the positioning data channel;
start symbol location information of the positioning data channel in the slot; and
occupied symbol number information.

10. The method as claimed in claim 1, wherein the configuration information of the resource pool comprises at least one of the following:
positioning channel configuration information;
positioning control channel configuration information;
positioning data channel configuration information;
resource pool frequency domain start PRB location information;
resource pool frequency domain occupied PRB number information;
resource pool frequency domain sub-channel size information;
resource pool occupied sub-channel number information; and
adjacent identity information of the positioning control channel and the positioning data channel.

11. The method as claimed in claim 10, wherein the positioning channel configuration information comprises:
time domain offset value information;
positioning channel time domain configuration information;
positioning channel frequency domain configuration information;
SL-PRS sequence information, wherein the sequence information comprises sequence ID information and/or sequence type information;
SL-PRS resource type information;
an SL-PRS period value;
time domain offset value information of the SL-PRS in each SL-PRS period relative to a start location of the period;
MCS table information of positioning data; and
time-frequency resource location information used to transmit the positioning channel in a single slot of the resource pool.

12. The method as claimed in claim 11, wherein the positioning channel time domain configuration information comprises at least one of the following:
SL-PRS time domain pattern information;
positioning channel time domain pattern information;
SL-PRS time domain start symbol location information;
positioning channel time domain start symbol location information;
SL-PRS time domain symbol number information;
positioning channel time domain symbol number information; and
pattern information of a time domain symbol location occupied by the SL-PRS.

13. The method as claimed in claim 11, wherein the positioning channel frequency domain configuration information comprises at least one of the following:
SL-PRS frequency domain pattern information;
SL-PRS frequency domain start PRB location information;
positioning channel frequency domain start PRB location information;
SL-PRS frequency domain start sub-channel location information;
positioning channel frequency domain start sub-channel location information;
SL-PRS frequency domain occupied PRB number information;
positioning channel frequency domain occupied PRB number information;
SL-PRS frequency domain occupied sub-channel number information;
positioning channel frequency domain occupied sub-channel number information; and
SL-PRS frequency domain shift information.

14. The method as claimed in claim 10, wherein the positioning control channel configuration information comprises at least one of the following:
information of a number of symbols occupied by the positioning control channel in the resource pool in a time domain slot;
information of a number of PRBs occupied by the positioning control channel in the resource pool in a frequency domain;
initialization ID information of a demodulation reference signal (DMRS) sequence of the positioning control channel;
reserved bit number information;
time-frequency resource location information used to transmit the positioning control channel in a slot of the resource pool; and
pattern information of a time domain symbol location occupied by the positioning control channel.

15. The method as claimed in claim 10, wherein the positioning data channel configuration information comprises at least one of the following:
MCS table information of positioning data;
information of a number of symbols occupied by one positioning data channel in the resource pool in a single time domain slot;
period value information of the positioning data channel; and
time-frequency resource location information used to transmit the positioning data channel in a slot of the resource pool.

16. The method as claimed in claim 1, wherein a first orthogonal frequency division multiplexing (OFDM) symbol on a time domain of the first channel is generated in a first mode, and the first OFDM symbol is used to perform automatic gain control (AGC) processing, wherein
the first mode comprises at least one of the following:
mapping an RE of a second OFDM symbol of the first channel repetitively; and
mapping a dedicated AGC reference signals (RS).

17. The method as claimed in claim 1, wherein a guard period (GP) is configured after a time domain end symbol of the first channel.

18. The method as claimed in claim 1, wherein an association between the positioning data channel and the positioning control channel comprises at least one of the following:
a number of PRBs jointly occupied by the positioning control channel and a first positioning data channel in a frequency domain is less than or equal to a sub-channel size, and the first positioning data channel is a positioning data channel scheduled by the positioning control channel;
scheduling granularity of the positioning data channel in a frequency domain is a sub-channel;
the number of PRBs jointly occupied by the positioning control channel and the first positioning data channel in the frequency domain is an integer multiple of a sub-channel size;
a number of PRBs occupied by the positioning control channel in a frequency domain is less than or equal to the sub-channel size;
the number of PRBs occupied by the positioning control channel in the frequency domain is equal to an integer multiple of the sub-channel size; and
a start PRB location of the positioning control channel is a start PRB location of each sub-channel.

19. A method of resource configuration for a sidelink, applied to a second device, comprising:
receiving information transmitted by a first device through a first channel according to configuration information of a resource pool, wherein
the first channel comprises at least one of the following:
a positioning channel used to transmit an SL-PRS or transmit an SL-PRS and positioning data information;
a positioning data channel used to transmit the positioning data information; and
a positioning control channel used to transmit positioning scheduling information.

20. A device, comprising: a transceiver, a memory, a processor, and a computer program stored on the memory and runnable on the processor, wherein the processor implements steps of the method of resource configuration for a sidelink as claimed in any one of claims 1-18 when executing the computer program; and alternatively, the processor implements steps of the method of resource configuration for a sidelink as claimed in claim 19 when executing the computer program.

21. An apparatus of resource configuration, applied to a first device, comprising:
a selection component used to select a transmission resource for a first channel from a resource pool according to configuration information of the resource pool, wherein
the first channel comprises at least one of the following:
a positioning channel used to transmit a sidelink-positioning reference signal (SL-PRS) or transmit an SL-PRS and positioning data information;
a positioning data channel used to transmit the positioning data information; and
a positioning control channel used to transmit positioning scheduling information.

22. An apparatus of resource configuration, applied to a second device, comprising:
a reception component used to receive information transmitted by a first device through a first channel according to configuration information of a resource pool, wherein
the first channel comprises at least one of the following:
a positioning channel used to transmit an SL-PRS or transmit an SL-PRS and positioning data information;
a positioning data channel used to transmit the positioning data information; and
a positioning control channel used to transmit positioning scheduling information.

23. A computer-readable storage medium, storing a computer program, wherein the computer program instruction implements steps of the method of resource configuration for a sidelink as claimed in any one of claims 1-18 or steps of the method of resource configuration for a sidelink as claimed in claim 19 when executed by a processor.
